# EUROPEAN PATENT APPLICATION

(11) **EP 4 534 161 A1**
(43) Date of publication of application: **09.04.2025**
(21) Application number: 24204494.9
(22) Date of filing: 03.10.2024
(51) Int. Cl.: A63F 13/24

(54) **AUTO-ROTATING THUMBSTICK**

(30) Priority: 03.10.2023 GB 202315124
(71) Applicant: Sony Interactive Entertainment Europe Limited, London W1F 7LP (GB)
(72) Inventor: LEUNG, Jun Yen, London, W1F 7LP (GB); CONNOR, Patrick John, London, W1F 7LP (GB); MONTI, Maria Chiara, London, W1F 7LP (GB); GREEN, Lawrence Martin, London, W1F 7LP (GB); CERRATO, Maurizio, London, W1F 7LP (GB); GUPTA, Rajeev, London, W1F 7LP (GB)
(74) Representative: Gill Jennings & Every LLP

(57) **Abstract**

A method for reducing uneven wear of a thumbstick (106) of a controller (100), the thumbstick being rotatably held within a socket (104) of a housing (102) of the controller, and the method comprising: pivoting (302) a thumbstick (106) of a controller (100) within a socket (104) of a housing (102) of the controller; and rotating the thumbstick within the socket and around a pivoted central axis of the thumbstick.

## Description

### FIELD OF THE INVENTION

The following disclosure relates to auto-rotating thumbsticks for a gaming system. Computer programs, systems and methods for implementing the devices are also described.

### BACKGROUND

A controller for a gaming system is an input device that enables a user to provide input to the gaming system, e.g. to play a video game. Such controllers typically include a set of buttons and one or more thumbsticks (also called analogue sticks, joy sticks, control sticks, thumb sticks, or sticks) to be operated by a user. The positions of the buttons and thumbsticks, as well as the shape of the controller itself, are designed to be as user friendly as possible in order to provide a comfortable and enjoyable gaming experience.

Thumbsticks project from the controller and can be moved by a user, for example by tilting or sliding, in any circumferential direction around a central "neutral" position, with the stick being biased to return to the neutral position making it also the default position for the stick. Input from a thumbstick is provided based on the position of the stick relative to the neutral position, and can typically be across a 360 degree angle range of movement at different amplitudes.

However, thumbsticks can suffer from uneven wear. This is most noticeable on their (often rubber or similar) tops, especially if said tops have grip nubs. However, the uneven wear also happens under the surface as well. Such uneven wear can affect overall gaming experience. The uneven wear may also result in erroneous input to a gaming system which further affects the overall gaming experience.

Accordingly, it is desirable to provide a way of reducing uneven wear on a thumbstick.

### SUMMARY OF INVENTION

It will be understood by a skilled person that any apparatus feature described herein may be provided as a method feature, and vice versa. It will also be understood that particular combinations of the various features described and defined in any aspects described herein can be implemented and/or supplies and/or used independently.

According to a first aspect, the present disclosure provides a controller comprising: a housing comprising a socket; a thumbstick rotatably held within the socket of the housing, wherein the thumbstick is configured to: pivot within the socket; and rotate within the socket around a pivoting central axis of the thumbstick. Preferably, the controller is for a gaming system. Additionally, the controller may be for another controllable system. For example, the controller may be usable to control a computerised and/or mechanical system, such as a robotic system, a remote-controlled or remote-operated system, a camera or camcorder system etc.

The pivoting central axis comprises a central axis of the thumbstick that pivots when the thumbstick pivots in the socket. Preferably the thumbstick is configured such that it rotatable in the socket when the thumbstick is pivoting. In some examples the thumbstick is rotatable only when the thumbstick is pivoting. Preferably the thumbstick is configured such that it is rotatable in the socket when the thumbstick is not pivoting. In some examples the thumbstick is rotatable only when the thumbstick is not pivoting. Preferably the thumbstick is configured such that it is rotatable in the socket when the thumbstick is pivoting and when the thumbstick is not pivoting.

Advantageously, the first aspect of the present invention provides a controller with a thumbstick which both rotates and pivots. In this way, the thumbstick is rotated while, before, or after it is pressed in a particular direction by the user, thereby rotating it regularly in line with the amount of use of the thumbstick. This results in more even wear of the thumbstick over time, both externally and internally. By reducing uneven wear of the thumbstick, the overall user experience can be improved and erroneous input to a gaming or other system as a result of uneven wear can be reduced. Reducing uneven wear on the thumbstick also ensures a longer life-span for the thumbstick, and subsequently the controller itself. This solution is also particularly advantageous in that such a mechanism requires no motor, power, or delicate parts.

In the controller, the thumbstick may comprise a ball positioned within the socket, wherein the ball is configured to permit the thumbstick to pivot within the socket and around a central point of the ball from a neutral position. Preferably, the ball is spherical in shape. Alternatively, the ball may have the shape of a (prolate or oblate) spheroid or ellipsoid, another shape derived from the revolution of a conic section, a torus etc.

In the controller, there may be a rotating mechanism, wherein the rotating mechanism is configured to permit the ball to rotate around the central pivoting axis of the thumbstick when the ball is pivoted from the neutral position. Additionally or alternatively, the thumbstick may be permitted to rotate around the central pivoting axis by means of a bearing system; a (fluid or friction) damper system; a system of shafts, hinges and/or axles; a swivel system etc.

In a preferable example of the first aspect of the invention there is provided a controller for a gaming system comprising: a housing comprising a socket; a thumbstick comprising a ball positioned within the socket of the housing, wherein the ball is configured to: pivot within the socket and around a central point of the ball from a neutral position; and rotate around a pivoting central axis of the thumbstick; and a rotating mechanism configured to rotate the ball around the pivoting central axis of the thumbstick when the ball is pivoted from the neutral position.

By rotating it when the thumbstick is pivoted from a neutral position, the thumbstick is not rotated unnecessarily and is only rotated when it has been or is to be used. The reduces use and subsequent wear on components, such as the rotating mechanism, which are used to rotate the thumbstick.

The use of a rotating mechanism which rotates the ball also means that wear is reduced on the thumbstick without additional user effort. The rotation only occurs when the ball is pivoted from the neutral position, but this pivoting occurs during normal use of the controller by the user, so no additional user effort is required to implement the rotation.

In the controller, the rotating mechanism may comprise pad mounted within the socket, wherein the pad is configured to engage with the ball and rotate. In this way, the transfer of rotational force from the rotating mechanism to the ball can be made more efficient and simpler, as only the pad of the rotating mechanism has to rotate, rather than the whole rotating mechanism. Using the pad to engage with the ball also provides a greater level of control over when the rotating mechanism engages with the ball or not. It also provides a mechanism which does not require delicate and complex parts to engage with the ball for providing the rotation.

In the controller, the pad may be further configured to engage with the ball when the ball is pivoted from the neutral position and disengage from the ball when the ball is in the neutral position. In this way, whether the pad is engaged or not with the ball provides control over the rotating mechanism so that it only rotates the ball when the ball is pivoted from the neutral position. Furthermore, by only rotating the ball when the ball is pivoted from the neutral position, the rotation of the ball is not immediately obvious to the user and the rotation will not interrupt the user's gaming experience.

In the controller, the pad may be configured to frictionally or mechanically engage with the ball. When the pad frictionally engages with the ball, the rotation of the pad may be effectively transferred to the ball to drive the rotation of the ball. By engaging frictionally, the two components do not have to be physically attached to one another, making the components easier and simpler to manufacture, assemble and replace. As the two components are not physically attached to one another, their engagement may be overcome by an opposing force applied by a user with their finger or thumb on the thumbstick. In this way, when the user is actively using the thumbstick, frictional engagement of the pad and ball may be overcome, so that it is not possible to drive the rotation of the ball. Using only friction to connect the pad with the ball means that the user's finger pressure will prevent the ball from rotating when they are trying to `hold a direction' on the controller.

When the pad mechanically engages with the ball, the rotation of the pad may be effectively transferred to the ball to drive the rotation of the ball. By engaging mechanically, the transfer of rotational force may be provided more efficiently, without the need for any substantial force to maintain the engagement.

In the controller, the rotating mechanism may further comprise a spring system configured to engage the pad with the ball and drive rotation of the ball around the pivoting central axis of the thumbstick. In this way, a solution is provided which requires no motor, power, or delicate parts. A spring system can both engage the pad by providing an upwards force and drive rotation with a rotational force. The spring system may be customised to provide the required amount of rotation. The use of a spring system also means that a simple and easy to implement rotating mechanism is provided, which will have a substantial lifetime due to a minimal number of parts which will wear over time. The spring system provides rotation to the ball without any additional user effort.

In the controller, the spring system may comprise a spring biased to provide engaging pressure on the pad towards the ball and rotational pressure on the ball. In this way, a solution is provided which requires no motor, power, or delicate parts. A spring can both engage the pad by providing an upwards force and drive rotation with a rotational force. The spring may be customised to provide the required amount and direction of rotation, as well as incremental rotation.

In the controller, the spring may be biased to provide an incremental amount of rotational pressure on the ball each time the ball is pivoted away from the neutral position. In this way, the thumbstick is not rotated an unnecessary amount and is only rotated when it has been used. Subsequently, the rotation of the ball is not immediately obvious to the user and the rotation will not interrupt the user's gaming experience.

In the controller, the rotating mechanism may further comprise a motor configured to drive rotation of the ball around the pivoting central axis of the thumbstick. In this way, the rotation of the ball can be driven in a controlled and precise manner such that the ball is not rotated unnecessarily, the rotation of the ball is not immediately obvious to the user and the rotation will not interrupt the user's gaming experience.

In the controller, the motor may be configured to turn on when the ball is pivoted from the neutral position and turn off when the ball is in the neutral position. In this way, by only rotating the ball when the thumbstick is pivoted from a neutral position, the thumbstick is not rotated unnecessarily and is only rotated when it has been used. The reduces use and subsequent wear on components, such as the motor, which are used to rotate the thumbstick. Furthermore, by only rotating the ball when the ball is pivoted from the neutral position, the rotation of the ball is not immediately obvious to the user and the rotation will not interrupt the user's gaming experience.

In the controller, the rotating mechanism may further comprise a spring biased to provide engaging pressure of the pad towards the ball. In this way, a solution for engaging the pad is provided which requires no motor, power, or delicate parts. A spring can engage the pad by providing an upwards force and can be customised to provide the required amount of force. The use of a spring also means that a simple and easy to implement engagement part of the rotating mechanism is provided, which will have a substantial lifetime due to a minimal number of parts which will wear over time.

In the controller, the rotating mechanism may further comprise a securing mechanism configured to provide engagement of the pad and the ball. In this way, the pad and the ball can be physically secured to one another so that the transfer of rotational force may be provided more efficiently, without the need for any substantial additional force to maintain the engagement.

In the controller, one or more of the housing, the thumbstick and the rotating mechanism may further comprise a locking mechanism configured to prevent the ball rotating when the ball is in the neutral position. In this way, the ball is only rotated when the thumbstick is pivoted from a neutral position, the thumbstick is not rotated unnecessarily and is only rotated when it has been used. Given that the default position of the thumbstick is the neutral position, and it always sits in this position when not being used by the user, in this way, the ball is further not rotated unnecessarily when not in use by the user. The reduces use and subsequent wear on components, such as the rotating mechanism, which are used to rotate the thumbstick. Furthermore, by only rotating the ball when the ball is pivoted from the neutral position, the rotation of the ball is not immediately obvious to the user and the rotation will not interrupt the user's gaming experience.

In the controller, the housing may further comprise a first set of gear teeth positioned along the circumference of the interior of the socket; and the thumbstick may further comprise a second set of gear teeth positioned on the exterior of the ball, configured to be engaged with the first set of gear teeth when the ball is in the neutral position and disengaged from the first set of gear teeth when the ball is pivoted from the neutral position, such that the rotating mechanism is only free to rotate the ball when the first set of gear teeth and the second set of gear teeth are disengaged. In this way, the use of two sets of gear teeth provides a simple and effective solution which requires no motor, power or delicate parts. By only disengaging the two sets of teeth when the thumbstick is pivoted from a neutral position, the thumbstick is not rotated unnecessarily and is only rotated when it has been used. The reduces use and subsequent wear on components, such as the rotating mechanism, which are used to rotate the thumbstick. By engaging the two sets of teeth when the thumbstick is in the neutral position, the ball is not rotated unnecessarily when not in use by the user.

In the controller, the first and second sets of gear teeth may be positioned such that they are not visible when the ball is positioned within the socket. In this way, the user cannot interfere with the functioning of the two sets of gear teeth. They are also less likely to be damaged and need replacing, and will have a longer lifespan. This position also ensures that they do not interfere with the use of the thumbstick by the user or the user's gaming experience.

In the controller, the first and second sets of gear teeth may be positioned at the same depth within the socket. In this way, the two sets of gear teeth can be full engaged when the ball is in the neutral position.

In the controller, the first and second sets of gear teeth are pointed. In this way, the teeth may slide out more easily when disengaging from each other when the stick is turned in a direction perpendicular to their position.

According to a second aspect, the present disclosure provides a method for reducing uneven wear of a thumbstick of a controller, the thumbstick being rotatably held within a socket of a housing of the controller, and the method comprising: pivoting a thumbstick of a controller within a socket of a housing of the controller; and rotating the thumbstick within the socket and around a pivoted central axis of the thumbstick. Preferably, the controller is for a gaming system. Additionally, the controller may be for another controllable system. For example, the controller may be usable to control a computerised and/or mechanical system, such as a robotic system, a remote-controlled or remote-operated system, a camera or camcorder system etc.

The pivoting central axis comprises a central axis of the thumbstick that pivots when the thumbstick pivots in the socket. Preferably the thumbstick is rotatable in the socket when the thumbstick is pivoting. In some examples the thumbstick is rotatable only when the thumbstick is pivoting. Preferably the thumbstick is rotatable in the socket when the thumbstick is not pivoting. In some examples the thumbstick is rotatable only when the thumbstick is not pivoting. Preferably the thumbstick is rotatable in the socket when the thumbstick is pivoting and when the thumbstick is not pivoting.

Advantageously, the second aspect of the present invention provides a method of reducing uneven wear of a thumbstick of a controller for a gaming system when the thumbstick is pivoted (e.g. from a neutral position or otherwise) by rotating the thumbstick. In this way, the thumbstick is rotated while, after, or before it is pressed in a particular direction by the user, thereby rotating it regularly in line with the amount of use of the thumbstick. This results in more even wear of the thumbstick over time, both externally and internally. By reducing uneven wear of the thumbstick, the overall gaming experience of the user can be improved and erroneous input to a gaming system as a result of uneven wear can be reduced. Reducing uneven wear on the thumbstick also ensures a longer life-span for the thumbstick, and subsequently the controller itself. This solution is also particularly advantageous in that such a method requires no motor, power, or delicate parts.

By rotating it when the thumbstick is pivoted (e.g. from a neutral position or otherwise), the thumbstick is not rotated unnecessarily and is only rotated when it has been or is to be used. The reduces use and subsequent wear on components, such as a set of fulcrums or a rotating mechanism, which can be used to pivot and rotate the thumbstick.

In a preferable example of the second aspect of the invention there is provided a method of reducing uneven wear of a thumbstick of a controller for a gaming system, the method comprising: pivoting, by a user, a ball of a thumbstick of a controller from a neutral position within a socket of a housing of the controller; driving, by a rotating mechanism, the ball to rotate around the pivoted central axis of the thumbstick.

In the method, the pivoting a thumbstick of a controller within a socket of a housing of the controller may further comprise pivoting, by a user, a ball of the thumbstick.

In the method, the rotating the thumbstick within the socket and around a pivoted central axis of the thumbstick may further comprise driving, by a rotating mechanism, the ball to rotate around the pivoted central axis of the thumbstick.

The use of a rotating mechanism which rotates the ball also means that wear is reduced on the thumbstick without additional user effort. The rotation only occurs when the ball is pivoted from the neutral position, but this pivoting occurs during normal use of the controller by the user, so no additional user effort is required to implement the rotation.

In the method, the method may further comprise, in response to pivoting the ball from a neutral position within the socket, disengaging a locking mechanism which prevents the ball from rotating around the pivoted central axis of the thumbstick.

In the method, the method may further comprise returning the ball to a neutral position within the socket; and engaging a locking mechanism which prevents the ball from rotating around the pivoted central axis of the thumbstick.

In this way, the ball is only rotated when the thumbstick is pivoted from a neutral position, when in the neutral position the ball is locked and the thumbstick is not rotated unnecessarily and is only rotated when it has been used. Given that the default position of the thumbstick is the neutral position, and it always sits in this position when not being used by the user, in this way, the ball is locked from rotating unnecessarily when not in use by the user.

In the method, engaging or disengaging a locking mechanism may comprise engaging or disengaging a first set of gear teeth positioned along the circumference of the interior of the socket with or from a second set of gear teeth positioned on the exterior of the ball. In this way, the use of two sets of gear teeth provides a simple and effective method which requires no motor, power or delicate parts. By only disengaging the two sets of teeth when the thumbstick is pivoted from a neutral position, the thumbstick is not rotated unnecessarily and is only rotated when it has been used. The reduces use and subsequent wear on components, such as the rotating mechanism, which are used to rotate the thumbstick. By engaging the two sets of teeth when the thumbstick is in the neutral position, the ball is not rotated unnecessarily when not in use by the user.

In the method, returning the ball to a neutral position within the socket may comprise utilising a biasing mechanism to return the ball to the neutral position. When the user is not operating the thumbstick, it returns to the default position which the gaming system interprets as 'no input'. In this way, the thumbstick may be returned to the neutral position (and thereby locked from rotating) without effort of the user so that unnecessary rotation does not occur.

In the method, driving the ball to rotate around the pivoted central axis of the thumbstick may comprise: engaging, by a pad mounted within the socket, the ball; and driving, by the pad, the ball to rotate around the pivoted central axis of the thumbstick. In this way, the transfer of rotational force from the rotating mechanism to the ball can be made more efficient and simpler, as only the pad of the rotating mechanism has to rotate, rather than the whole rotating mechanism. Using the pad to engage with the ball also provides a greater level of control over when the rotating mechanism engages with the ball or not. It also provides a mechanism which does not require delicate and complex parts to engage with the ball for providing the rotation.

In the method, engaging, by the pad mounted within the socket, the ball may comprise frictionally engaging the ball and the pad with a biased spring or mechanically engaging the ball and the pad with a motor. When the pad frictionally engages with the ball, the rotation of the pad may be effectively transferred to the ball to drive the rotation of the ball. By engaging frictionally, the two components do not have to be physically attached to one another, making the components easier and simpler to manufacture, assemble and replace. As the two components are not physically attached to one another, their engagement may be overcome by an opposing force applied by a user with their finger or thumb on the thumbstick. In this way, when the user is actively using the thumbstick, frictional engagement of the pad and ball may be overcome, so that it is not possible to drive the rotation of the ball. Using only friction to connect the pad with the ball means that the user's finger pressure will prevent the ball from rotating when they are trying to 'hold a direction' on the controller.

By using a spring for frictionally engaging the pad and ball, a solution is provided which requires no motor, power, or delicate parts. A spring can both engage the pad by providing an upwards force and drive rotation with a rotational force. The spring may be customised to provide the required amount and direction of rotation, as well as incremental rotation. The use of a spring also means that a simple and easy to implement rotating method is provided, which will have a substantial lifetime due to a minimal number of parts which will wear over time. The spring provides rotation to the ball without any additional user effort.

When the pad mechanically engages with the ball, the rotation of the pad may be effectively transferred to the ball to drive the rotation of the ball. By engaging mechanically, the transfer of rotational force may be provided more efficiently, without the need for any substantial force to maintain the engagement. By using a motor for mechanically engaging the pad and ball, the rotation of the ball can be driven in a controlled and precise manner such that the ball is not rotated unnecessarily, the rotation of the ball is not immediately obvious to the user and the rotation will not interrupt the user's gaming experience.

In the method, driving the ball to rotate may comprise driving the ball to rotate by an incremental amount each time the ball is pivoted away from the neutral position. In this way, the thumbstick is not rotated an unnecessary amount and is only rotated when it has been used. Subsequently, the rotation of the ball is not immediately obvious to the user and the rotation will not interrupt the user's gaming experience.

According to a third aspect, the present disclosure provides a gaming system comprising a base unit and a controller in communication with the base unit, wherein the controller is configured according to the first aspect, or any of the optional implementations thereof, described above.

Advantageously, the third aspect of the present invention provides the same advantages described with respect to the apparatus according to the first aspect, as above.

According to a fourth aspect, the present disclosure provides gaming system comprising a base unit and a controller in communication with the base unit, wherein the controller is configured to perform a method according to the second aspect, or any of the optional implementations thereof, described above.

Advantageously, the fourth aspect of the present invention provides the same advantages described with respect to the methods according to the second aspect, as above.

According to a fifth aspect, the present disclosure provides a non-transitory storage medium storing instructions which, when executed by a gaming system, cause the gaming system to perform a method according to the second aspect, or any of the optional implementations thereof, described above.

Advantageously, the fifth aspect of the present invention provides the same advantages described with respect to the methods according to the second aspect, as above.

According to a sixth aspect, the present disclosure provides a controller for a gaming system comprising: a housing comprising a socket; a thumbstick comprising a ball positioned within the socket of the housing, wherein the ball is configured to: pivot within the socket and around a central point of the ball from a neutral position; and rotate around a pivoting central axis of the thumbstick; and a rotating mechanism configured to rotate the ball around the pivoting central axis of the thumbstick when the ball is pivoted from the neutral position.

Advantageously, the sixth aspect of the present invention provides the same advantages described with respect to the apparatus according to the first aspect, as above. Optional implementations described in relation to the first aspect may be implemented in relation to the sixth aspect.

According to a seventh aspect, the present disclosure provides a method of reducing uneven wear of a thumbstick of a controller for a gaming system, the method comprising: pivoting, by a user, a ball of a thumbstick of a controller from a neutral position within a socket of a housing of the controller; driving, by a rotating mechanism, the ball to rotate around the pivoted central axis of the thumbstick.

Advantageously, the seventh aspect of the present invention provides the same advantages described with respect to the method according to the second aspect, as above. Optional implementations described in relation to the second aspect may be implemented in relation to the seventh aspect.

It will be understood by a skilled person that any apparatus feature described herein may be provided as a method feature, and vice versa. It will also be understood that particular combinations of the various features described and defined in any aspects described herein can be implemented and/or supplies and/or used independently.

Moreover, it will be understood that the present invention is described herein purely by way of example, and modifications of detail can be made within the scope of the invention.

### BRIEF DESCRIPTION OF DRAWINGS

One or more embodiments will now be described, purely by way of example, with reference to the accompanying figures, in which:
Figure 1 shows a schematic diagram of a controller for a gaming system according to an embodiment.
Figures 2A and 2B show schematic diagrams of a thumbstick of a controller in a neutral position and the thumbstick of the controller not in a neutral position, respectively.
Figures 2C and 2D show schematic diagrams of a thumbstick of a controller in a neutral position and the thumbstick of the controller not in a neutral position, according to an embodiment.
Figure 3 shows a flow diagram setting out a method of reducing uneven wear of a thumbstick of a controller for a gaming system, according to an embodiment.
Figure 4 shows an example video gaming system.

### DETAILED DESCRIPTION

In the following description and accompanying drawings, corresponding features may preferably be identified using corresponding reference numerals to avoid the need to describe said common features in detail for each and every embodiment.

For clarity and brevity, unless explicitly specified otherwise, terms such as "located", "positioned", "disposed", "mounted", "encased" are merely intended to express relative position of two components, and do not exclude other components from being located between said two components. The terms "user" and "player" are used interchangeably herein.

The term gaming system as used herein refers to an electronic video game system including a device such as a video game console, or a personal computer (PC). The gaming system is capable of executing software including one or more of games, applications such as video streaming, music playback, video and audio call applications, etc.

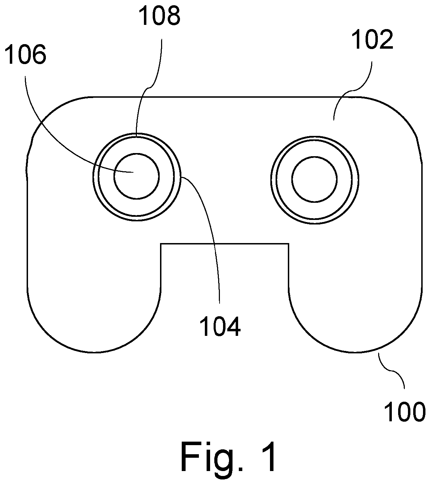

Figure 1 shows a controller 100 for a video game system (gaming system). The controller 100 includes a housing 102. The housing 102 may be the body of the controller 100 and may house and encase the components of the controller 100. Particularly, the housing 102 may protect electrical or sensitive components from damage, as well as providing the body of the controller for the user to hold. The housing 102 may include protruding features for ease of holding by the user. The housing 102 may include a socket 104 which may be configured to hold components of the controller 100.

The controller further includes a thumbstick 106 that a user can operate to provide input to the gaming system. Though the controller of Figure 1 has two thumbsticks, embodiments of the invention can be implemented in a controller that has at least one thumbstick. The thumbstick 106 is moveable (e.g. by a user tilting, sliding, or pivoting the thumbstick) and input from the thumbstick is provided based on the current position 210 of the thumbstick relative to its default, neutral position 212. Typically, position measurement elements in the controller, such as potentiometers, are used to measure the exact position of the stick within its full range of motion 214. The current position 210 of the stick refers to the physical position of the thumbstick. The current position of the stick detected by the controller and/or a gaming system may be the same or different to the current physical position of the thumbstick.

In embodiments of the invention, the thumbstick 106 is rotatably held within the socket 104 of the housing 102 and the thumbstick 106 is configured to pivot within the socket 104 and rotate within the socket 104 around a pivoting central axis of the thumbstick 106. The central pivoting axis of the thumbstick 106 may be an axis passing perpendicularly to the page (i.e. perpendicularly to the plane of the controller 100 in Figure 1) through the centre point of the thumbstick 106 shown in Figure 1. The thumbstick 106 (e.g. the central pivoting axis thereof) may pivot around a central point of the thumbstick 106, around another physical point in/on the thumbstick 106 (such as a point on its surface proximate to the socket surface), around any axis (such as an axis parallel to the page i.e. parallel to the plane of the controller 100) etc. The thumbstick 106 may be configured to both rotate and pivot simultaneously and/or it may be configured such that rotation and pivoting can be distinct movements which can occur at different times i.e. non-concurrently.

In some examples, the thumbstick 106 is coupled to the socket 104 by way of one or more fulcrums. The fulcrum(s) may be fixedly connected to the socket 104 and pivotably connected to the thumbstick 106. Each fulcrum may be configured to permit the thumbstick 106 to pivot (e.g. around its central point) in a different plane. For example, there may be one fulcrum configured to permit pivoting in any two directions, wherein said two directions are separated by an angle of 180 degrees (i.e. to permit pivoting within one particular two-dimensional plane), or there may be two fulcrums configured to permit pivoting in two distinct planes, or there may be one multidirectional fulcrum configured to permit pivoting in two or more distinct planes.

In addition to pivoting, the thumbstick 106 is configured to rotate within the socket 104. This may involve the controller 100 further comprising a rotating mechanism whereby the thumbstick 106 (and optionally the one or more fulcrums) can be driven to rotate around the central axis of the thumbstick 106 (such as via a driven rotatable shaft arranged along said central axis within the thumbstick 106) during pivoting or not during pivoting. In this way, the thumbstick 106 is rotatably held within the socket 104 and is configured to both pivot and rotate either simultaneously or not simultaneously. Alternatively or additionally, the controller 100 may be configured such that the thumbstick 106 can be manually rotated. In one embodiment the controller 100 further comprises a release mechanism whereby the thumbstick 106 can be released (either automatically or manually, such as through operation of a trigger on the thumbstick 106 or elsewhere on the controller 100) from its coupling with the socket 104 (and optionally with the one or more fulcrums) to allow it to rotate. By providing a release mechanism that unlocks the thumbstick, allowing it to be rotated within the socket 104, allows a user to periodically rotate the thumbstick to prevent preferential wear on one surface of the thumbstick 106. The thumbstick may thereafter be returned to its coupled state within the socket 104 having been rotated around its central axis into a different angular position with respect to its previous angular position in the socket 104. In one embodiment, the thumbstick 106 is configured to pivot by means of one or more fulcrums coupling the thumbstick 106 to the socket 104, and is configured to rotate by means of a release mechanism permitting the thumbstick 106 to be (at least partially) released or extracted from the socket 104, rotated to a new angular position, and reinserted into (i.e. recoupled with) the socket 104, whereafter normal operation of the thumbstick 106 can proceed. In this way, the thumbstick 106 is rotatably held within the socket 104 and is configured to both pivot and rotate non-concurrently.

In other examples described hereinafter, the thumbstick 106 includes a spherical or spheroidal element (such as a ball 108) positioned within the socket, wherein said element is configured to permit the thumbstick to pivot within the socket 104 in many planes (or indeed in an infinite number of planes) and around a central point of the ball from a neutral position.

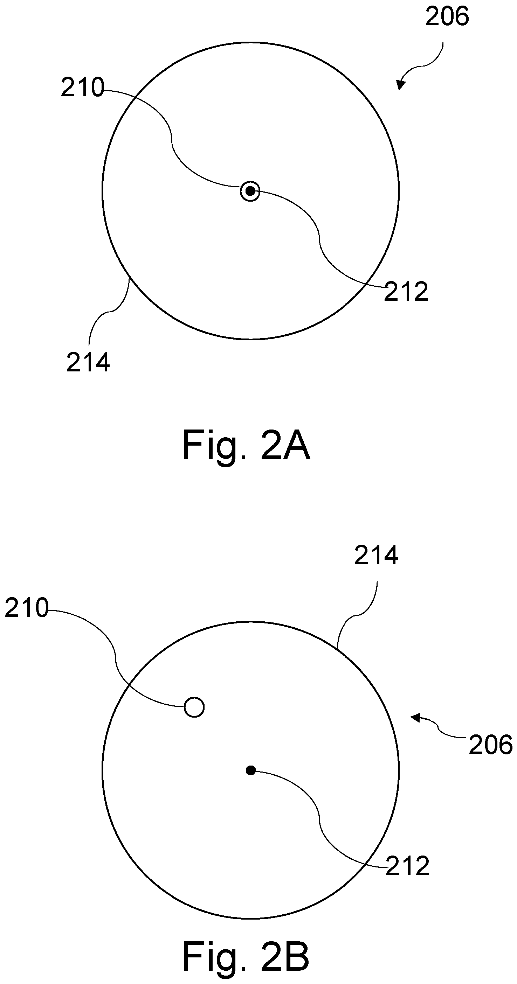

Figures 2A and 2B show schematic diagrams of a thumbstick 206 in some embodiments of the invention where the thumbstick 206 is moveable in a circumferential direction around the neutral position 212 at the centre of the range of motion 214. The thumbstick is typically biased to return to the neutral position 212. This is preferable as it improved the user experience but is not necessary for the thumbstick to function and provide input. The neutral position of the thumbstick is the intended default position of the thumbstick. The neutral position is typically as the centre of the range of circumferential movements possible for the thumbstick, and the thumbstick is biased to return to the neutral position. The principle underlying this is that when the user is not operating the thumbstick, it returns to the default position which the gaming system interprets as 'no input'.

While Figures 2A and 2B show a thumbstick moveable in circumferential directions, other thumbsticks (not shown) may only be moveable along a linear direction. It will be appreciated that method of the invention are also applicable to such linear thumbsticks.

Figure 2A shows the thumbstick 206 when its current position 210 is at (i.e. the same as) the neutral position 212. Alternatively, the current position of the thumbstick 206 is at (i.e. the same as) the neutral position 212 at the centre of the circumferential range of motion 214 of the thumbstick 206. Figure 2B shows the thumbstick 206 after moving away from the neutral position 212, so that its current position 210 is not the same as the neutral position.

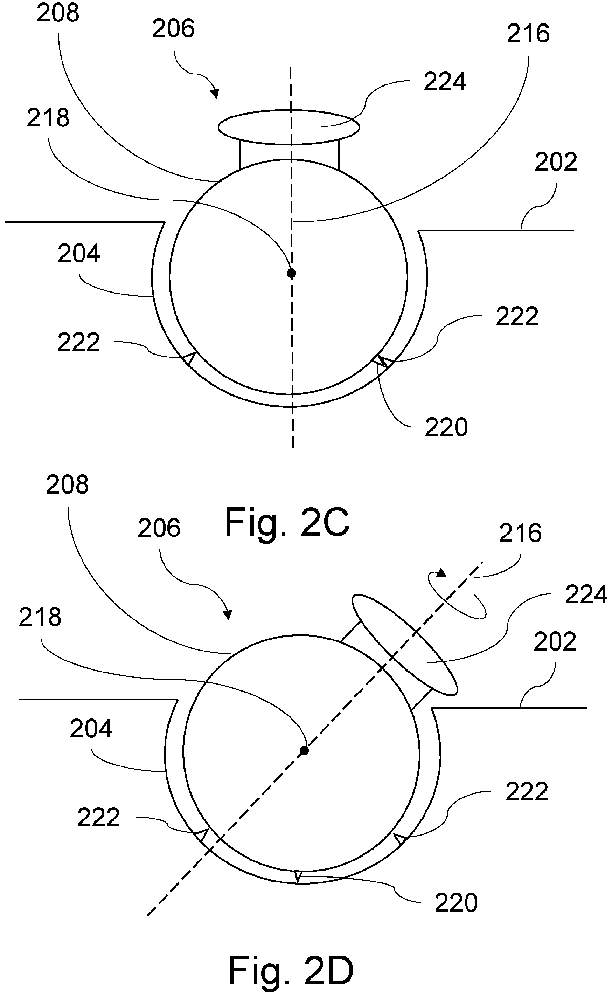

Figures 2C and 2D show schematic diagrams of a controller including a thumbstick 206 including a ball 208 and a protrusion 224 and a housing 202 including a socket 204. The housing 202 also includes a first set of gear teeth 222 and the ball 208 includes a second set of gear teeth 220. Also illustrated in Figures 2C and 2D, for clarity, is the central point of the ball 218 and the central axis of the thumbstick 216, as well as an arrow indicating how the ball (and subsequently the thumbstick 206) can rotate around the central axis of the thumbstick 206. Though the example thumbsticks 206 illustrated by Figures 2C and 2D show a thumbstick 206 with protrusion 224 and a ball 208, embodiments of the invention can be implemented in a thumbstick 206 that has only a ball 208 and no protrusion 224.

Additionally, though the example thumbsticks 206 illustrated by Figures 2C and 2D show a first set of gear teeth 222 and a second set of gear teeth 220, embodiments of the invention can be implemented without these features.

Figure 2C shows the thumbstick 206 when its current position is at (i.e. the same as) the neutral position. The neutral position in this example diagram is when the central axis of the thumbstick 216 is vertical, or perpendicular to the plane of the housing 202. Figure 2C shows that when the thumbstick is in the neutral position, the first set of gear teeth 222 and the second set of gear teeth 220 are engaged, so as to prevent the ball from rotating around the central axis of the thumbstick 216.

Figure 2D shows the thumbstick 206 after moving away from the neutral position, so that its current position is not the same as the neutral position. Specifically, Figure 2D shows the position of the thumbstick 206 when the ball 208 has been pivoted from the neutral position. This pivoted position of the ball 208 (and subsequently the thumbstick 206) shows how the central axis of the thumbstick 216 pivots will the ball 208 (and subsequently the thumbstick 206). The arrow indicates how the ball 208 and subsequently the thumbstick 206) can rotate around the pivoted central axis of the thumbstick. Figure 2D shows that when the thumbstick is pivoted from the neutral position, the first set of gear teeth 222 and the second set of gear teeth 220 are disengaged, so the ball is free to rotate around the pivoting central axis of the thumbstick.

The thumbstick 106 includes a ball 108. The ball 108 may be positioned within the socket 104 of the housing 102. The ball 108 may be configured to pivot within the socket 104 of the housing and around a central point of the ball 108 from a neutral position. For example, as shown in Figure 2C, wherein the ball is in a neutral position and the point 218 is the central point of the ball. The central point of the ball 108 may be the physical center point inside the ball. The central point of the ball 108 may be positioned at the central point of the socket 104 when the ball 108 is positioned within the socket 104. By pivoting around the central point of the ball 108, the ball 108 may pivot in a stable manner within the socket 104 which it is positioned within. If the ball pivoted around a different point, it may not stay positioned within the socket 104.

The neutral position of the ball 108 may be a position which the ball 108 is biased to return to. The neutral position of the ball 108 may be such that a central axis of the thumbstick 106 is vertical. For example, as shown in Figure 2C, wherein the ball is in a neutral position and the central axis 216 is vertical. The central axis of the thumbstick 106 may pivot when the ball is pivoted within the socket 104 and around the central point of the ball 10 from the neutral position. The ball 108 may also be configured to rotate around a pivoting central axis of the thumbstick 106, such that the rotation of the ball 108 continues to be around the central axis, no matter which direction it has been pivoted in. For example, as shown in Figure 2D, wherein the ball is pivoted within the socket and the rotation of the ball around the central axis 216 is illustrated.

The thumbstick may also include a protrusion that a user can use to grip and better control the movement and pivoting of the ball as desired. The protrusion may be positioned on the ball 108 of the thumbstick 106. The protrusion may further be positioned such that it is positioned above the central point of the above in the neutral position and the central axis of the thumbstick 106 passes through the centre of it. The protrusion may have a rubber or similar top, and may have grip nubs.

The controller further includes a rotating mechanism. The rotating mechanism may be positioned at or near the base of the socket with the ball placed on top of the mechanism. The rotating mechanism is configured to rotate the ball around the pivoting central axis of the thumbstick when the ball is pivoted from the neutral position. This ensures that the thumbstick rotates every time it is pressed in a direction by the user, thereby rotating it with use. This results in more even wear of the thumbstick over time. The rotating mechanism may be implemented with no motor or power and provided with mechanical components which may be biased.

The rotating mechanism may be engaged when the ball is pivoted from the neutral position and disengaged when the ball is in the neutral position. Alternatively, the rotating mechanism may be unlocked when the ball is pivoted from the neutral position and locked when the ball is in the neutral position.

The rotating mechanism may rotate the ball slowly in either direction and push upwards to engage the with the ball. The rotating mechanism may be driven in any way that provides rotation to the ball when engaged. The rotating mechanism may rotate the ball incrementally or minimally, so that the rotation of the ball is not immediately obvious to the user. The rotation of the rotating mechanism may be overcome by pressure applied by the user to the ball. The rotating mechanism may only be activated periodically for a set amount of time, or may be activated as a result of a state of the thumbstick, controller or gaming system.

The rotating mechanism may include a pad 110. The pad 110 may comprise a textured material which can provide frictional engagement. The pad 110 may be mounted within the socket 104 and may be configured to engage with the ball 108 and rotate. The pad 110 may be mounted in the bottom, or near the bottom of the socket. The pad 110 may be configured to frictionally engage with the ball 108. Frictional engagement means that the pad 110 and the ball 108 are not attached to one another mechanically or physically, merely by friction. Pressure is applied to the ball 108 by the pad 110 so that they are engaged with one another and rotation of the ball may be subsequently driven by the rotation of the pad. The friction caused by the pad pushing upwards into the ball allows the pad's rotation to slightly rotate the ball when it is not locked. The pad 110 and/or the ball 108 may be textured so that they may better frictionally engage. The frictional engagement of the pad 110 and the ball 108 may be overcome with any opposing force over a threshold amount. The threshold amount may be lower than the amount of opposing force applied by a user with their finger or thumb on the thumbstick 106, such that when the user is actively using the thumbstick 106, the frictional engagement of the pad 110 and ball 108 is overcome and it is not possible to drive rotation of the ball 108. Using only friction to connect the pad with the ball means that the user's finger pressure will prevent the ball from rotating when they are trying to 'hold a direction' on the controller.

The pad 110 may alternatively or additionally be configured to mechanically engage with the ball 108. Mechanical engagement means that design and geometry of the pad 110 and the ball 108 are configured such that they will remain engaged even with an opposing force applied to them. The mechanical engagement of the pad and the ball means that the rotation of the ball may be subsequently driven by the rotation of the pad. As they are mechanically connected, the pad's rotation will transfer to rotate the ball when it is not locked.

The pad 110 may be configured to engage with the ball 108 when the ball 108 is pivoted within the socket 104. By the pad being engaged when the ball 108 is pivoted within the socket 104, the subsequent driving of rotation of the ball 108 may be tied to the position of the ball 108 within the socket 104. The pad 110 may be further configured to disengage from the ball 108 when the ball 108 is in the neutral position. By the pad being disengaged when the ball 108 is in the neutral position and is not pivoted within the socket 104, the driving of rotation of the ball 108 can be prevented when the ball is in the neutral position and the driving may be tied to the position of the ball 108 within the socket 104.

The pad 110 may be configured to drive rotation of the ball 108 around the pivoting central axis of the thumbstick 106 transferring rotational force from the rotating mechanism to the ball.

The rotating mechanism may include a spring system which is configured to engage the pad 110 with the ball 108 and drive the rotation of the ball 108 around the pivoting central axis of the thumbstick. The spring system may include a spring which is biased to provide engaging pressure on the pad 110 towards the ball 108 and rotational pressure on the ball 108. The spring may be biased to provide an incremental amount of rotational pressure on the ball 108 each time the ball 108 is pivoted away from the neutral position.

The rotating mechanism may alternatively include a motor configured to drive the rotation of the ball 108 around the pivoting central axis of the thumbstick. The motor may be configured to turn on when the ball is pivoted within the socket and turn off when the ball is in the neutral position. In this way, the rotation of the ball can be driven in a controlled and precise manner such that the ball is not rotated unnecessarily, the rotation of the ball is not immediately obvious to the user and the rotation will not interrupt the user's gaming experience.

When the rotating mechanism includes a motor, the rotating mechanism may also include a spring biased to provide engaging pressure of the pad 110 towards the ball 108. The engaging pressure may be frictional or mechanical pressure. Alternatively, when the rotating mechanism includes a motor, the rotating mechanism may also include a securing mechanism to provide engaging pressure of the pad 110 towards the ball 108. The pressure may be frictional or mechanical pressure.

The rotating mechanism may include a locking mechanism. The locking mechanism may be configured to prevent the ball rotating when the ball is in the neutral position. The locking mechanism may be further configured to enable the ball 108 to rotate when the ball 108 is pivoted within the socket 104. In this way, the ball is only rotated when the thumbstick is pivoted from a neutral position, the thumbstick is not rotated unnecessarily and is only rotated when it has been used. Given that the default position of the thumbstick is the neutral position, and it always sits in this position when not being used by the user, in this way, the ball is further not rotated unnecessarily when not in use by the user. By only rotating the ball when the ball is pivoted from the neutral position, the rotation of the ball is not immediately obvious to the user and the rotation will not interrupt the user's gaming experience.

The housing 102 may include a locking mechanism. The locking mechanism may be configured to prevent the ball rotating when the ball is in the neutral position. The locking mechanism may be further configured to enable the ball 108 to rotate when the ball 108 is pivoted within the socket 104. The locking mechanism may be further configured to enable the ball 108 to rotate when the ball 108 is pivoted within the socket 104. In this way, the ball is only rotated when the thumbstick is pivoted from a neutral position, the thumbstick is not rotated unnecessarily and is only rotated when it has been used. Given that the default position of the thumbstick is the neutral position, and it always sits in this position when not being used by the user, in this way, the ball is further not rotated unnecessarily when not in use by the user. By only rotating the ball when the ball is pivoted from the neutral position, the rotation of the ball is not immediately obvious to the user and the rotation will not interrupt the user's gaming experience.

The thumbstick 106 may include a locking mechanism. The locking mechanism may be configured to prevent the ball rotating when the ball is in the neutral position. The locking mechanism may be further configured to enable the ball 108 to rotate when the ball 108 is pivoted within the socket 104. The locking mechanism may be further configured to enable the ball 108 to rotate when the ball 108 is pivoted within the socket 104. In this way, the ball is only rotated when the thumbstick is pivoted from a neutral position, the thumbstick is not rotated unnecessarily and is only rotated when it has been used. Given that the default position of the thumbstick is the neutral position, and it always sits in this position when not being used by the user, in this way, the ball is further not rotated unnecessarily when not in use by the user. By only rotating the ball when the ball is pivoted from the neutral position, the rotation of the ball is not immediately obvious to the user and the rotation will not interrupt the user's gaming experience.

Alternatively, the housing may include a first set of gear teeth. The first set of gear teeth may include a plurality of gear teeth. The first set of gear teeth may be positioned along the circumference of the interior of the socket 104 and may be positioned deep in the housing and not visible to users. The first set of gear teeth may be positioned such that they are not visible when the ball is positioned within the socket 104. For example, as shown in Figure 2C, wherein the first set of gear teeth 222 are shown positioned within the socket. The first set of gear teeth may be pointed so that they may slide out more easily (from engagement with the second set of gear teeth) when the thumbstick or ball is turned in a direction perpendicular to their position. The first set of gear teeth may be wide gear teeth.

The thumbstick may also include a second set of gear teeth. The second set of gear teeth may include a plurality of gear teeth. The second set of gear teeth may include less teeth than the first set of gear teeth. The second set of gear teeth may be positioned on the exterior of the ball 108 and placed along at a single position. For example, as shown in Figure 2C, wherein the second set of gear teeth 220 are shown positioned in a single position on the ball. For example, they may be positioned at 12 o'clock on the circumferences of the ball, as the same depth as the first set of gear teeth along the circumference of the housing. In any case, this position will rotate as the ball rotates. The second set of gear teeth are positioned at only one position on the circumference of the ball so that the thumbsitck can still be conformably turned. The second set of gear teeth may be positioned such that they are not visible when the ball is positioned within the socket 104. The second set of gear teeth may be pointed so that they may slide out more easily (from engagement with the first set of gear teeth) when the thumbstick or ball is turned in a direction perpendicular to their position. In the above example, this would be when the thumbstick is turned to the 3 or 6 o'clock positions.

The second set of gear teeth may be configured to be engaged with the first set of gear teeth when the ball is in the neutral position. In this way, teeth from each of the two sets of teeth will only lock when the thumbstick is in the neutral (upright) position. For example, as shown in Figure 2C, wherein the ball is in the neutral position and the first set of gear teeth 222 are engaged with the second set of gear teeth 220. The second set of gear teeth may be configured to be disengaged from the first set of gear teeth when the ball is pivoted within the socket, such that the ball is only free to rotate when the first set of gear teeth and the second set of gear teeth are disengaged. In this way, teeth from each of the two sets of teeth will release when the thumbstick is pressed in any direction away from the neutral position. For example, as shown in Figure 2D, wherein the ball is pivoted from the neutral position and the first set of gear teeth 222 are disengaged from the second set of gear teeth 220.

The first set of gear teeth and the second set of gear teeth are positioned at the same depth within the socket. Such that the two sets of gear teeth can be fully engaged when the ball is in the neutral position.

The controller may include a sensor configured to detect pivoting movement of the ball. The controller may include a processor configured to translate movement detected by the sensor into an output from the controller and an input to the gaming system.

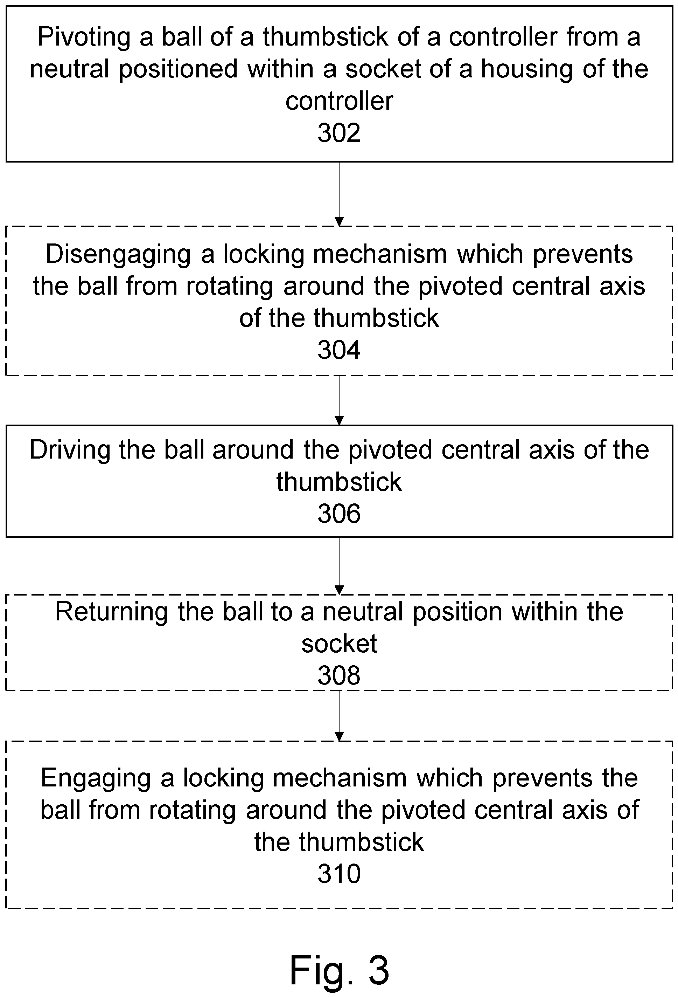

Figure 3 shows a flow diagram setting out the method of reducing uneven wear of a thumbstick of a controller for a gaming system, according to an embodiment of the present disclosure.

At step 302, a ball of a thumbstick of a controller is pivoted from a neutral position within a socket of a housing of the controller. The ball may be pivoted by the user.

Optionally, at step 304, in response to pivoting the ball from a neutral position within the socket, a locking mechanism which prevents the ball from rotating around the pivoted central axis of the thumbstick is disengaged. Disengaging the locking mechanism may include disengaging a first set of gear teeth positioned along the circumference of the interior of the socket from a second set of gear teeth positioned on the exterior of the ball.

At step 306, the ball is driven by a rotating mechanism to rotate around the pivoted central axis of the thumbstick. Rotating the ball around the pivoted central axis of the thumbstick may include a pad mounted within the socket engaging the ball. The pad engaging the ball may include frictionally engaging the ball and the pad with a biased spring. The pad engaging the ball may alternatively include mechanically engaging the ball and the pad with a motor.

Rotating the ball around the pivoted central axis of the thumbstick may also include the pad driving the ball to rotate around the pivoted central axis of the thumbstick. The pad driving the ball to rotate may include driving the ball to rotate by an incremental amount each time the ball is pivoted away from the neutral position.

Optionally, at step 308, the ball is returned to the neutral position within the socket. Returning the ball to the neutral position within the socket may include utilising a biasing mechanism to return the ball to the neutral position.

Optionally, as step 310, a locking mechanism which prevents the ball from rotating around the pivoted central axis of the thumbstick is engaged. Engaging the locking mechanism may include engaging a first set of gear teeth positioned along the circumference of the interior of the socket with a second set of gear teeth positioned on the exterior of the ball.

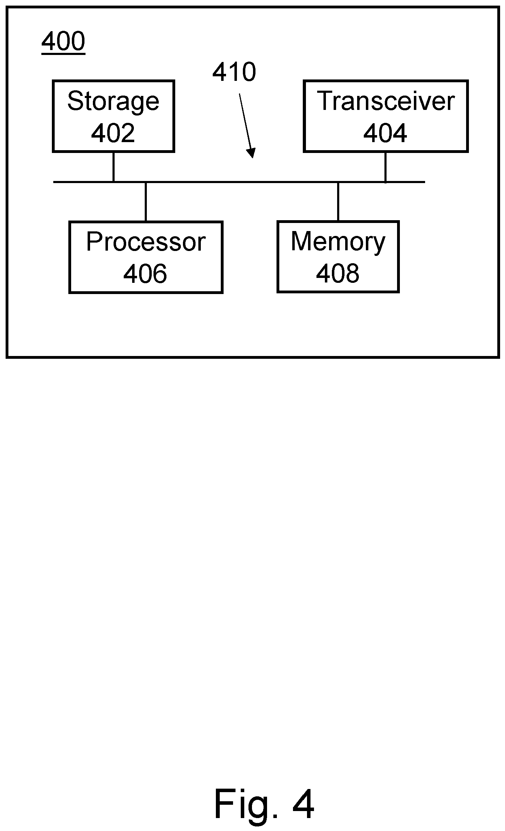

Figure 4 illustrates a schematic of a video game device 400. The video game device 400 comprises storage 402, transceiver 404, processor 406, and memory 408. The video game device 400 may include various other modules and sensors not shown. The components of the video game device 400 are typically connected by a bus 410 to facilitate communication between components.

The storage 403 may be a storage module suitable for storing information associated with the method discussed above. For example, instructions to perform the method discussed above may be stored in storage module 402. The storage module 402 is intended to mean non-volatile storage.

Transceiver 404 is configured to receive signals from and transmit signals to an input device, as well as external other components connected to the video game device, such as a display.

Processor 406 can be configured to execute instructions which cause the processor to perform any of the methods discussed above. The processor 406 could be implemented as a single processor chip or a set of processor chips including a digital signal processor. The processor 406 may be configured to implement the method if the storage module 402 stores the corresponding information associated with the method.

Memory 408 refer to storage which may be volatile storage, such as RAM.

The methods and processes described above can be implemented as code (e.g., software code).

For completeness, such code can be stored on one or more computer-readable media, which may include any device or medium that can store code and/or data for use by a computer system. When a computer system reads and executes the code stored on a computer-readable medium, the computer system performs the methods and processes embodied as code stored within the computer-readable storage medium. In certain embodiments, one or more of the steps of the methods and processes described herein can be performed by a processor (e.g., a processor of a video game device or remote server).

Having described aspects of the disclosure in detail, it will be apparent that modifications and variations are possible without departing from the scope of the aspects of the disclosure as defined in the appended claims. As various changes could be made in the above constructions, products and method without departing from the scope of aspects of the disclosure, it is intended that all matter contained in the above description and shown in the accompanying drawings shall be interpreted as illustrative and not in a limiting sense.

## Claims

1. A controller (100) comprising:
a housing (102) comprising a socket (104);
a thumbstick (106) rotatably held within the socket (104) of the housing (102), wherein the thumbstick (108) is configured to:
pivot within the socket (104); and
rotate within the socket around a pivoting central axis of the thumbstick (106).

2. The controller of claim 1, wherein the thumbstick comprises a ball (108) positioned within the socket, wherein the ball is configured to permit the thumbstick to pivot within the socket and around a central point of the ball from a neutral position.

3. The controller of claim 2, wherein the controller further comprises a rotating mechanism, wherein the rotating mechanism is configured to permit the ball to rotate around the central pivoting axis of the thumbstick when the ball is pivoted from the neutral position.

4. The controller of claim 3, wherein the rotating mechanism comprises a pad (110) mounted within the socket, wherein the pad is configured to engage with the ball and rotate.

5. The controller of claim 4, wherein the pad is further configured to engage with the ball when the ball is pivoted from the neutral position and disengage from the ball when the ball is in the neutral position, and the pad is further configured to frictionally or mechanically engage with the ball.

6. The controller of claim 4 or claim 5, wherein the rotating mechanism further comprises a spring system configured to engage the pad with the ball and drive rotation of the ball around the pivoting central axis of the thumbstick, and the spring system comprises a spring biased to provide engaging pressure on the pad towards the ball and rotational pressure on the ball.

7. The controller of claim 6, wherein the spring is biased to provide an incremental amount of rotational pressure on the ball each time the ball is pivoted away from the neutral position.

8. The controller of any of claims 3 to 5, wherein the rotating mechanism further comprises a motor configured to drive rotation of the ball around the pivoting central axis of the thumbstick, and the motor is configured to turn on when the ball is pivoted from the neutral position and turn off when the ball is in the neutral position.

9. The controller of claim 8, wherein the rotating mechanism further comprises:
a spring biased to provide engaging pressure of the pad towards the ball; or
a securing mechanism configured to provide engagement of the pad and the ball.

10. The controller of any of claims 3 to 9, wherein one or more of the housing, the thumbstick and the rotating mechanism further comprise a locking mechanism configured to prevent the ball rotating when the ball is in the neutral position.

11. The controller of any of claims 3 to 10, wherein:
the housing further comprises a first set of gear teeth positioned along the circumference of the interior of the socket; and
the thumbstick further comprises a second set of gear teeth positioned on the exterior of the ball, configured to be engaged with the first set of gear teeth when the ball is in the neutral position and disengaged from the first set of gear teeth when the ball is pivoted from the neutral position, such that the rotating mechanism is only free to rotate the ball when the first set of gear teeth and the second set of gear teeth are disengaged.

12. The controller of claim 11, wherein the first and second sets of gear teeth are positioned such that they are not visible when the ball is positioned within the socket.

13. The controller of claim 11 or claim 12, wherein the first and second sets of gear teeth are positioned at the same depth within the socket.

14. The controller of any of claims 11 to 13, wherein the first and second sets of gear teeth are pointed.

15. A gaming system comprising a base unit and a controller in communication with the base unit, wherein the controller is configured according to any of claims 1 to 14.
